# EUROPÄISCHE PATENTSCHRIFT

(11) **EP 0 663 050 B1**
(45) Veröffentlichungstag und Bekanntmachung des Hinweises auf die Patenterteilung: **04.03.1998**
(21) Anmeldenummer: 94911772.5
(22) Anmeldetag: 09.08.1993
(51) Int. Cl.: F16K 24/06, F16K 1/54, F16K 1/44

(54) **EVAKUIERBARE KAMMER MIT EINEM BELÜFTUNGSVENTIL**
VACUUM CHAMBER WITH AIR-INLET VALVE
CHAMBE A VIDE AVEC SOUPAPE D'AERATION

(30) Priorität: 02.10.1992 DE 4233207
(43) Veröffentlichungstag der Anmeldung: 19.07.1995
(73) Patentinhaber: Balzers und Leybold Deutschland Holding Aktiengesellschaft, 63450 Hanau (DE)
(72) Erfinder: WALTER, G., Wilhelm, D-50169 Kerpen (DE); DUSY, Michael, D-50825 Köln (DE); LENTGES, Gottfried, D-50226 Frechen (DE)
(74) Vertreter: Leineweber, Jürgen, Dipl.-Phys.
(86) Internationale Anmeldenummer: EP9302115
(87) Internationale Veröffentlichungsnummer: WO9408163

(56) Entgegenhaltungen:
- DE-A- 2 428 094
- DE-A- 2 457 964
- NL-A- 7 203 334
- US-A- 2 061 852
- US-A- 3 180 360
- US-A- 4 114 850

## Beschreibung

Die Erfindung betrifft eine evakuierbare Kammer mit einem Belüftungsventil welches mit einem Ventilsitz und einem Ventilteller ausgerüstet ist. Eine derartige Kammer ist aus dem Dokument DE-A-2 428 094 bekannt.

Im Zusammenhang mit der zunehmenden Anwendung der Vakuumtechnik bei Produktionsanlagen (insbesondere auf dem Gebiet der Halbleitertechnik) und bei der Durchführung von Experimenten (Fallversuche, Durchführung von Experimenten während des freien Falls, also im schwerelosen Zustand, usw.) wird es immer häufiger erforderlich, großvolumige Kammern, Räume usw. nach Durchführung des Prozesses immer wieder geräuscharm belüften zu müssen.

Bei Vakuumventilen üblicher Bauart nimmt der Durchströmquerschnitt in der Anfangsphase einer Öffnungsbewegung besonders schnell zu. Die Folge ist, daß die Einströmbewegung der Luft schlagartig beginnt, so daß selbst bei langsamsten Öffnungsbewegungen unzulässige Unterdruckbeaufschlagungen in der Wiederbelüftungsanlage eintreten können. Nicht nur die Rohrleitungen selbst, sondern auch weitere Einrichtungen der Wiederbelüftungsanlage, wie Reinigungs-, Trockungs-, Kühleinrichtungen oder dergleichen, sind dadurch gefährdet. Weiterhin treten bei Vakuumventilen üblicher Bauart Turbolenzen auf, die nicht nur eine hohe Geräuschentwicklung sondern auch eine gestörte und damit verlangsamte Einströmgeschwindigkeit der Luft zur Folge haben.

Der vorliegenden Erfindung liegt die Aufgabe zugrunde, eine Kammer mit einem Belüftungsventil der eingangs erwähnten Art zu schaffen, das eine störungsfreie und geräuscharme Belüftung selbst größter Kammervolumen erlaubt.

Erfindungsgemäß wird diese Aufgabe dadurch gelöst, daß sich an die vom Ventilsitz gebildete Öffnung eine Laval-Düse anschließt, daß der Ventilteller einen zentralen, sich bei geschlossenem und teilweise geöffnetem Ventil in die Laval-Düse hinein erstreckenden Dorn aufweist und daß dieser Dorn derart geformt ist, daß seine Oberfläche mit der Innenseite der Laval-Düse in jeder Öffnungsstellung des Ventils den engsten Durchströmquerschnitt im Bereich des Ventiles bildet. Aufgrund des Vorhandenseins der Laval-Düse ist zunächst eine störungsfreie Einströmung der Luft unter Laval-Bedingungen sichergestellt. Vorgegebene Belüftungszeiten können dadurch exakt eingehalten werden. Störende Geräusche treten nicht auf. Die Oberfläche·des Dornes und die Innenseite der Laval-Düse bilden ein Durchströmöffnung, die sich während der Öffnungsphase des Ventils nur langsam vergrößert. Dadurch steigt auch der Massendurchsatz während der Öffnungsphase nur langsam an. Unzulässige Unterdruckbeaufschlagungen innerhalb der Wiederbelüftungsanlage während des Öffnungsvorganges treten infolge des langsamen Anstiegs des Massendurchsatzes nicht auf.

Vorzugsweise ist der Dorn derart gestaltet, daß der Massendurchsatz mit der Öffnungsbewegung des Dornes proportional ansteigt. Diese Maßnahme vereinfacht die Gestaltung des Antriebs für den Ventilteller, welcher dann ebenfalls linear ausgebildet sein kann.

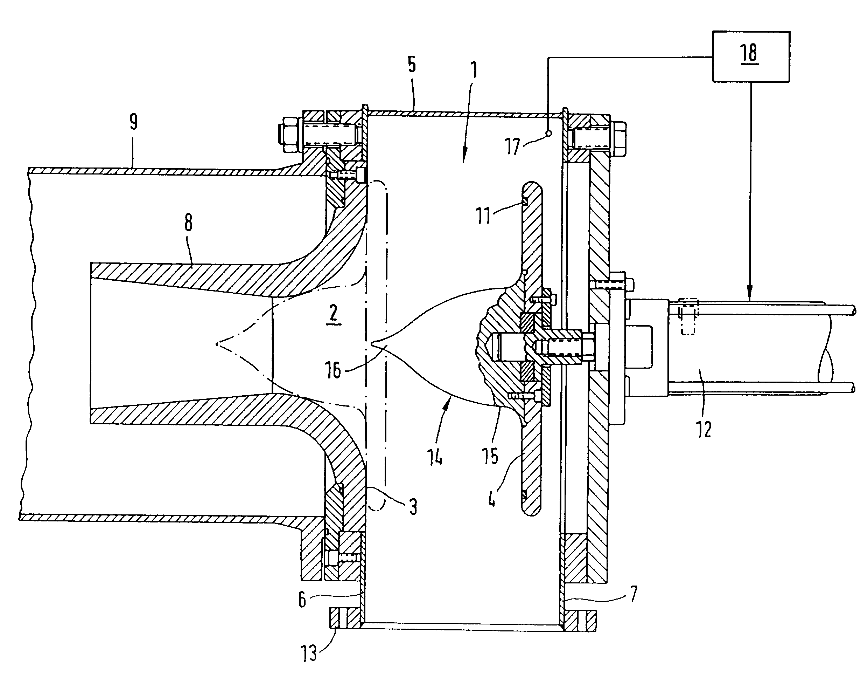

Weitere Vorteile und Einzelheiten sollen anhand eines in der Figur dargestellten Ausführungsbeispieles für ein Belüftungsventil nach der Erfindung erläutert werden.

Das in der Figur dargestellte Ventil 1 weist einen die Ventilöffnung 2 umgebenden Ventilsitz 3 und einen Ventilteller 4 auf. Das Ventil 1 ist Bestandteil eines Gehäuses 5 mit den parallel zueinander angeordneten Wandungen 6 und 7. In der Wandung 6 befindet sich die Ventilöffnung 2 mit dem sie umgebenden Ventilsitz 3. An die Ventilöffnung 2 schließt sich eine Laval-Düse 8 an, die innerhalb einer zur zu belüftenden Kammer führenden Rohrleitung 9 mündet. Beim Ausführungsbeispiel bildet der eintrittsseitig gelegene Rand der Laval-Düse 8 gleichzeitig den Ventilsitz 3. Die Wandung 7 trägt den Ventilteller 4 mit seinem Dichtungsring 11, der im geschlossenen Zustand des Ventils 1 (strichpunktiert angedeutet) dem Ventilsitz 3 aufliegt. Dem Ventilteller 4 ist außerhalb des Gehäuses 5 ein Antrieb 12 zugeordnet, mit dessen Hilfe der Ventilteller 4 zwischen seiner Öffnungs- und Schließstellung hin- und herbewegt werden kann.

Das Gehäuse 5 ist seinerseits Bestandteil einer Wiederbelüftungsanlage, die im einzelnen nicht dargestellte Einrichtungen zum Reinigen, Trocknen und/oder Kühlen der zur Belüftung verwendeten Gase, in der Regel Luft, umfaßt. An diese Einrichtungen ist das Gehäuse 5 mit seinem Flansch 13 angeschlossen.

Zur Ermöglichung der erwünschten, störungsfreien Belüftung ist neben der Laval-Düse 8 ein am Ventilteller 4 befestigter Dorn 14 vorgesehen, dessen Durchmesser von seinem Fußbereich 15 bis zu seiner Spitze 16 kontinuierlich abnimmt. Die Durchmesserabnahme ist zunächst gering, wird dann etwa im Bereich der halben Höhe des Dorns stärker und nimmt im Bereich der Spitze 16 wieder ab, so daß die Spitze 16 eine in Bezug auf einen turbulenzfreien Strömungsabriß günstige Form hat.

Die Form des Dornes 14 ist so gewählt, daß die Innenwandung der Laval-Düse 8 und die Oberfläche des Dornes 14 bei jeder Öffnungsstellung des Ventiles 1 den engsten Durchströmquerschnitt im gesamten Bereich des Ventiles 1 bildet. Im Schließzustand (strichpunktiert angedeutet) liegt der Dorn 14 der Laval-Düse 8 nahezu an. Mit beginnender Öffnungsbewegung nimmt der Durchströmquerschnitt nur langsam zu, so daß auch der für die Unterdruckbeaufschlagung der Wiederbelüftungsanlage maßgebende Massendurchsatz nur langsam zunimmt, die Entstehung von unzulässigen Unterdrücken also vermieden werden kann.

Die Laval-Düse 8 und der Ventilteller Dorn 14 sind derart gestaltet, daß bei jedem Öffnungsgrad des Ventils 1 jeweils nur ein engster Strömungsquerschnitt im Bereich der Laval-Düse vorhanden ist; wodurch gewährleistet ist, daß von der geringsten bis zur vollen Öffnung des Ventils die Laval-Bedingung eingehalten ist, solange das kritische Druckverhältnis (Druck P_{EIN} vor dem Ventil zu Druck P_{AUS} hinter dem Ventil größer/gleich²) vorhanden ist. Hierdurch ist sichergestellt, daß der Massendurchsatz während der Öffnungs- bzw. Schließphase des Ventils proportional ansteigt bzw. abfällt.

Durch die vorgegebene Strömungskontur wird eine gerichtete Strömung (COANDA-Effekt) erreicht, wodurch u.a.
- Aufgrund der bekannten Beziehung z.B. für die Soll-Belüftungszeit der Ventilöffnungsgrad oder umgekehrt ermittelt und eingehalten und
- eine geringe Schallemission innerhalb des Ventils erreicht
werden kann.

Der Antrieb 12 ist zweckmäßig ein Pneumatik-Antrieb. Mit Antrieben dieser Art können schnelle Schließbewegungen des Tellers 4 bewirkt werden. Diese können notwendig werden, wenn sich in der Wiederbelüftungsanlage ein zu niedriger Druck einstellen sollte. Zur Überwachung des Druckes im Gehäuse 5 ist ein Drucksensor 17 vorgesehen, der mit einer Überwachungseinrichtung 18 in Verbindung steht. Diese bewirkt ein schnelles Schließen des Ventils 1 (Schließzeit < 1 sec), wenn der Druck im Gehäuse 5 einen eingestellten Grenzwert unterschreitet.

Die erfindungsgemäße Kammer-Belüftungsventil Kombination erlaubt eine störungsfreie Belüftung (SOFT-VENTING) von Kammern oder Räumen nahezu beliebiger Größe, die vorab bis zu 10⁻² mbar und weniger evakuiert wurden.

## Patentansprüche

1. Evakuierbare Kammer mit einem Belüftungsventil (1), welches mit einem Ventilsitz (3) und einem Ventilteller (4) ausgerüstet ist, dadurch gekennzeichnet, dass sich an die vom Ventilsitz (3) gebildete Öffnung (2) eine Laval-Düse (8) anschließt, dass der Ventilteller (4) einen zentralen, sich bei geschlossenem und teilweise geöffnetem Ventil in die Laval-Düse (8) hineinerstreckenden Dorn (14) aufweist und dass dieser Dorn (14) derart geformt ist, dass seine Oberfläche mit der Innenseite der Laval-Düse (8) in jeder Öffnungsstellung des Ventils (1) den engsten Durchströmquerschnitt im Bereich des Ventiles bildet.

2. Kammer nach Anspruch 1, dadurch gekennzeichnet, dass der Dorn (14) des Belüftungsventiles (1) derart gestaltet ist, dass der Massendurchsatz durch das Ventil mit der Öffnungsbewegung des Dornes (14) linear ansteigt.

3. Kammer nach Anspruch 1 oder 2, dadurch gekennzeichnet, dass der eintrittsseitig gelegene Rand der Laval-Düse (8) gleichzeitig den Ventilsitz (3) bildet.

4. Kammer nach Anspruch 1, 2 oder 3, dadurch gekennzeichnet, dass dem Ventilteller (4) ein Pneumtik-Antrieb (12) zugeordnet ist.

5. Kammer nach einem der vorhergehenden Ansprüche, dadurch gekennzeichnet, dass das Ventilgehäuse (5) Bestandteil einer Wiederbelüftungsanlage ist.

6. Kammer nach Anspruch 5, dadurch gekennzeichnet, dass dem Antrieb (12) eine Drucküberwachungseinrichtung (18) mit einem innerhalb des Gehäuses (5) angeordneten Drucksensor (17) zugeordnet ist.

7. Kammer nach einem der Ansprüche 1 bis 6, dadurch gekennzeichnet, dass das Belüftungsventil als Schnellschlussventil mit einer Schließzeit ausgebildet ist, welche kleiner als eine Sekunde ist.

## Claims

1. Evacuatable chamber with a venting valve (1), which is equipped with a valve seat (3) and a valve disk (4), characterized in that a Laval nozzle (8) adjoins the opening (2) formed by the valve seat (3), that the valve disk (4) has a central mandrel (14) extending inside the Laval nozzle (8) when the valve is closed and partially opened and that this mandrel (14) is formed in such a way that with the inner side of the Laval nozzle (8) its surface forms the narrowest flow cross-section in the region of the valve in every opening position of the valve (1).

2. Chamber according to Claim 1, characterized in that the mandrel (14) of the venting valve (1) is formed in such a way that the mass throughput through the valve rises in a linear manner with the opening movement of the mandrel (14).

3. Chamber according to Claim 1 or 2, characterized in that the edge of the Laval nozzle (8) on the inlet side forms the valve seat (3) at the same time.

4. Chamber according to Claim 1, 2 or 3, characterized in that a pneumatic drive (12) is assigned to the valve disk (4).

5. Chamber according to one of the preceding Claims, characterized in that the valve chamber (5) is a component of a re-venting unit.

6. Chamber according to Claim 5, characterized in that a pressure monitoring device (18) with a pressure sensor (17) arranged inside the chamber (5) is assigned to the drive (12).

7. Chamber according to one of Claims 1 to 6, characterized in that the venting valve is formed as a quick-closure valve with a closure time which is less than one second.

## Revendications

1. Chambre susceptible d'être évacuée, comprenant une soupape de mise à l'air (1), laquelle est équipée d'un siège de soupape (3) et d'un opercule de soupape (4), caractérisée en ce qu'une tuyère de Laval (8) se raccorde à l'ouverture (2) formée par le siège de soupape (3), en ce que l'opercule de soupape (4) présente un doigt central (14) qui s'étend jusqu'à l'intérieur de la tuyère de Laval (8) lorsque la soupape est fermée et partiellement ouverte, et en ce que ledit doigt (14) est formé de manière que sa surface forme avec la face intérieure de la tuyère de Laval (8) dans chaque position d'ouverture de la soupape (1) la section de passage la plus étroite dans la région de la soupape.

2. Chambre selon la revendication 1, caractérisée en ce que le doigt (14) de la soupape de mise à l'air (1) est réalisé de telle manière que le débit en masse à travers la soupape augmente linéairement avec le déplacement d'ouverture du doigt (14).

3. Chambre selon l'une ou l'autre des revendications 1 et 2, caractérisée en ce que la bordure disposée du côté entrée de la tuyère de Laval (8) forme simultanément le siège de soupape (3).

4. Chambre selon l'une des revendications 1, 2 ou 3, caractérisée en ce qu'un entraînement pneumatique (12) est associé à l'opercule de soupape (4).

5. Chambre selon l'une des revendications précédentes, caractérisé en ce que le boîtier de soupape (5) fait partie d'une installation de renouvellement d'air.

6. Chambre selon la revendication 5, caractérisée en ce que des moyens de surveillance de pression (18), comprenant un capteur de pression (17) agencé à l'intérieur du boîtier (5), sont associés à l'entraînement (12).

7. Chambre selon l'une des revendications 1 à 6, caractérisée en ce que la soupape de mise à l'air est réalisée sous forme d'une soupape à fermeture rapide avec un temps de fermeture inférieur à une seconde.
